# EUROPEAN PATENT SPECIFICATION

(11) **EP 4 676 613 B1**
(45) Date of publication and mention of the grant of the patent: **02.12.2026**
(21) Application number: 24717878.3
(22) Date of filing: 07.03.2024
(51) Int. Cl.: A63J 1/02, A63G 31/00, A63G 31/16

(54) **POWER-DATA FIXATION DEVICE FOR ATTRACTION SYSTEM**
STROMDATENFIXIERVORRICHTUNG FÜR EIN ANZIEHUNGSSYSTEM
DISPOSITIF DE FIXATION DE DONNÉES DE PUISSANCE POUR SYSTÈME D'ATTRACTION

(30) Priority: 10.03.2023 US 202363451480 P; 23.02.2024 US 202418585960
(43) Date of publication of application: 14.01.2026
(73) Proprietor: Universal City Studios LLC, Universal City, CA 91608 (US)
(72) Inventor: VANCE, Eric Allan, Orlando, Florida 32819 (US)
(74) Representative: Keltie LLP
(86) International application number: PCT/US2024/018915
(87) International publication number: WO 2024/191755

(56) References cited:
- WO-A1-2022/103632
- DE-A1- 102018 209 174
- US-A1- 2020 171 397
- US-A1- 2023 029 823

## Description

### BACKGROUND

This section is intended to introduce the reader to various aspects of art that may be related to various aspects of the present disclosure, which are described below. This discussion is believed to be helpful in providing the reader with background information to facilitate a better understanding of the various aspects of the present disclosure. Accordingly, it should be understood that these statements are to be read in this light, and not as admissions of prior art.

Since the early twentieth century, amusement parks have substantially grown in popularity, and an increasing amount of people visit amusement park attractions. Further, an increasing number of amusement park attractions have utilized show-ride entertainments systems that provide various immersive experiences to guests within the amusement park. The show-ride entertainment systems may employ movable ride vehicles configured to receive one or more of the guests within the amusement park. Further, the show-ride entertainment systems may generate visual, audio, and/or haptic feedback and may utilize various show structures (e.g., show action equipment) to provide an immersive experience to guests within the park. It is now recognized that it may be desirable to incorporate additional components into show-ride systems to provide additional services and features, thereby improving a guest experience within the amusement park.

US 2023029823 A1 describes a connector system, ride system and method for connecting and supporting a suspended load. The system includes a suspended carrier having a first connector part and a suspended load support, arranged and disposed to support a suspended load, the suspended load support having a second connector part. A first magnetic coupler is affixed to the suspended carrier and a second magnetic coupler is affixed to the suspended load support. The first magnetic coupler includes a first arrangement of magnets and the second magnetic coupler includes a second arrangement of magnets. The first arrangement of magnets is selectively arranged and disposed to provide alignment and detachable engagement to the magnets of the second arrangement of magnets. The first connector part and the second connector part releasably engage to connect the suspended carrier to the suspended load support and permit transmission of motion, power, signal and at least one utility from the suspended carrier to the suspended load support.

DE 102018209174 A1 describes an amusement ride comprising at least one gondola forming a passenger cabin for passengers of the ride, wherein the gondola has a first coupling device and a second coupling device, at least one robot arm having a first counter-coupling device configured to interact with the first coupling device of the gondola to form a first coupling arrangement such that, in a locked state of the first coupling arrangement, the gondola is attached to the robot arm and, in an unlocked state of the first coupling arrangement, the gondola is detachable from the robot arm, and at least one first mobile carriage having a second counter-coupling device configured to interact with the second coupling device of the gondola to form a second coupling arrangement such that, in a locked state of the second coupling arrangement, the gondola is attached to the first mobile carriage and the gondola can be detached from the first mobile carriage in an unlocked state of the second coupling arrangement.

Document WO2022103632A1 discloses a reaction controlled system including a track, a trolley that travels along the track, an animated figure coupled to the trolley, at least one reaction control element coupled to a portion of the animated figure (e.g., on the features, limbs, and/or body of the animated figure), and a controller. The controller detects presence of a ride vehicle or a guest. The controller also controls the trolley to position the animated figure based on the presence of the ride vehicle or the guest. The controller also controls animation of the animated figure by operating the reaction control element.

### SUMMARY

Certain embodiments commensurate in scope with the originally claimed subject matter are summarized below. These embodiments are not intended to limit the scope of the disclosure, but rather these embodiments are intended only to provide a brief summary of certain disclosed embodiments. Indeed, the present disclosure may encompass a variety of forms that may be similar to or different from the embodiments set forth below.

In an embodiment, an amusement park ride system includes one or more ride vehicles configured to transport passengers, where each ride vehicle of the one or more ride vehicles includes an exterior surface and a base coupler (e.g., coupling assembly, coupling mechanism, coupling device, securer (e.g., securing assembly, securing mechanism, securing device)) disposed on or accessible via the exterior surface and a show structure configured to operate for viewing by the passengers. The show structure includes a first coupler configured to removably couple with and/or secure to a respective base coupler of a ride vehicle of the one or more ride vehicles and a second coupler. The amusement park ride system includes a manipulator configured to transport the show structure to and from the ride vehicle of the one or more ride vehicles, where the manipulator comprises a transport coupler configured to removably couple with and/or secure to the second coupler.

In an embodiment, a manipulator for a show-ride system includes one or more arms and one or more joints configured to enable movement of the manipulator and a transport coupler coupled with and/or secured to an arm of the one or more arms and configured to removably couple with and/or secure to a show structure coupler of a show structure. The transport coupler includes a base plate having one or more magnets arranged about a central axis of the base plate, a motor coupled with and/or secured to the base plate and configured to rotate the base plate, a power induction coil configured to provide power to the show structure in response to the transport coupler coupling to the show structure coupler, and a data communicator configured to communicate data to the show structure in response to the transport coupler coupling to the show structure coupler.

In an embodiment, a show structure configured to operate for viewing by passengers includes a first coupler positioned at a first location on the show structure, where the first coupler is accessible by a base coupler of a ride vehicle or a prop coupler of a show action prop and is configured to removably couple and/or secure the show structure with/to the ride vehicle or the show action prop, and a second coupler positioned at a second location on the show structure, where the second coupler is accessible by a transport coupler of a manipulator and is configured to removably couple and/or secure the show structure with/to the manipulator. Each of the first coupler and the second coupler include a base plate having one or more magnets configured to align with one or more additional magnets of the base coupler, the transport coupler, or the prop coupler to couple and/or secure the show structure to the ride vehicle, the manipulator, or the show action prop, respectively.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and context of embodiments of the present disclosure without limitation to the claimed subject matter.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic view of an embodiment of a show-ride system of an amusement park, in accordance with embodiments described herein;
FIG. 2 is a schematic view of an embodiment of various components of the show-ride system of FIG. 1, in accordance with embodiments described herein;
FIG. 3 is perspective view of an embodiment of a respective coupler of FIG. 2, in accordance with embodiments described herein;
FIG. 4A is a perspective view of an embodiment of a show structure coupler of FIG. 2, in accordance with embodiments described herein;
FIG. 4B is a side view of an embodiment of a show structure coupler of FIG. 2, in accordance with embodiments described herein; and
FIG. 5 is a schematic view of an embodiment of the manipulator of FIG. 1, in accordance with embodiments described herein.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

The present disclosure relates generally to the field of amusement parks and more specifically to show-ride entertainment systems within amusement parks. Show-ride entertainment systems may employ a number of different components to provide an experience for guests within an amusement park. For example, the show-ride entertainment system may employ one or more ride vehicles that are configured to receive one or more guests within the park and carry or transport the guests along a pre-defined path through a show-ride attraction. The show-ride system may also include show action equipment to provide an immersive experience to guests transported through the show-ride system via the ride vehicles. For example, the show-ride system may include show action equipment corresponding to one or more transferable objects (e.g., props that can be moved about a ride environment for entertainment purposes) or show structures (e.g., animated figures), which may also be transferrable objects that may be manipulated and/or transported within the show-ride system to provide guests with an experience. In some cases, the transferable objects may be positioned on a particular ride vehicle, and may be configured to operate (e.g., actuate features of an animated figure) to provide an experience to guests within the ride vehicle. Additionally, the show-ride system may include show action equipment corresponding to a manipulator or other movement mechanism that may be configured to move the one or more show structures through the show-ride system (e.g., to and from ride vehicles, to and from other show action equipment) to provide an experience for guests on the show-ride system. However, due to the moving nature of the various components within the show-ride system, it may be difficult to adjust a position of the show action equipment (e.g., transferable object) relative to the ride vehicle or other show action equipment within the show-ride system without interfering with a guest's experience. Additionally, it may be difficult to determine when a proper coupling between the show structure and a respective component of the show-ride system has been achieved, thereby enabling power and/or entertainment data to be communicated to the show structure. As discussed herein, a "proper coupling" may refer to a coupling and/or securement between a show structure and a component of the show-ride system that enables communication of power and/or data and limits an amount of movement of the show structure relative to the component attached thereto by less than a threshold amount.

Accordingly, present embodiments are directed to a show-ride system that employs one or more couplers (e.g., coupling assembly, coupling mechanism, coupling component, securer (e.g., securing assembly, securing mechanism, securing component)) on various components of the show-ride system, where each of the couplers is configured to transfer power and/or data to a show structure coupled with it and/or secured thereto, thereby enabling the show structure to provide visual and/or audio feedback to guests. In certain embodiments, the couplers may include magnets (e.g., rare earth magnets, electromagnets) that may interact with magnets associated with the show structure, thereby coupling the show structure to a component of the show-ride system. Additionally, the couplers may include power induction coils, contact-based transmitters, and/or data antennas such that power and data may be transferred and/or communicated to the show structure, thereby enabling the show structure to operate to provide visual and/or audio feedback to the guests transported through the show-ride system. The magnets may enable the show-ride system to determine that a proper coupling has been achieved between a respective coupler and the show structure, thereby facilitating the communication of power and data to the show structure. Further, a proper coupling between a respective coupler and the show structure may facilitate disengagement of the show structure from a component of the show-ride system used to transport the show structure. For example, the show structure may be coupled with and/or secured to a coupler of the manipulator at a first point in time and the manipulator may communicate power and data to the show structure through a coupler associated with the manipulator. Upon receiving an indication to position the show structure on a ride vehicle, the manipulator may transport the show structure to the ride vehicle. The manipulator may then position the show structure proximate a coupler of the ride vehicle and when the magnets of the ride vehicle coupler couple with, align with, and/or secure to magnets of the show structure, the show-ride system may send a signal to the manipulator to disengage from the show structure. Further, the show-ride system may determine, based on the coupling and/or securement between the ride vehicle and the show structure, to provide power and/or transfer entertainment data to the show structure from the ride vehicle. For example, upon determining that the magnets of a particular coupler are coupled with and/or secured to the show structure (e.g., a metal plate or a set of magnets associated of the show structure), the show-ride system may determine that entertainment data and power may be transferred to the show structure from the particular coupler.

Indeed, by utilizing the couplers discussed herein, various components of the show-ride system may communicate entertainment data and power to the show structure such that at any given time during operation of the show-ride system (e.g., when the show structure is coupled with and/or secured to a ride vehicle, when the show structure is being transported by the manipulator, when the show structure is coupled with and/or secured to a show action prop), the show structure may be operated to provide visual and/or audio feedback to guests transported through the show-ride system. In this way, show structures may be transferred, transported, and/or manipulated more efficiently about the show-ride system while continuously operating to present entertainment data to guests, thereby providing an essentially seamless experience (e.g., experience with limited number of interruptions based on the show structure not receiving power and/or data) to guests transported through the show-ride system.

As may be appreciated, implementations of the present disclosure may be embodied as a system, method, device, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer-readable program code embodied thereon.

Computer program instructions, in accordance with present embodiments, may be stored in a computer readable medium (e.g., hard drive, memory, disk) that can direct a computer, other programmable data processing apparatus, or other devices to function in a particular manner, such that the instructions stored in the computer readable medium initiate or cause a specified function/act. The computer program instructions may also be loaded onto a computer, other programmable data processing apparatus, or other devices to cause a series of operational steps to be performed on the computer, other programmable apparatus or other devices to produce a computer implemented process such that the instructions, which execute on the computer or other programmable apparatus, provide processes for implementing the functions/acts specified in the flowchart and/or block diagram block or blocks.

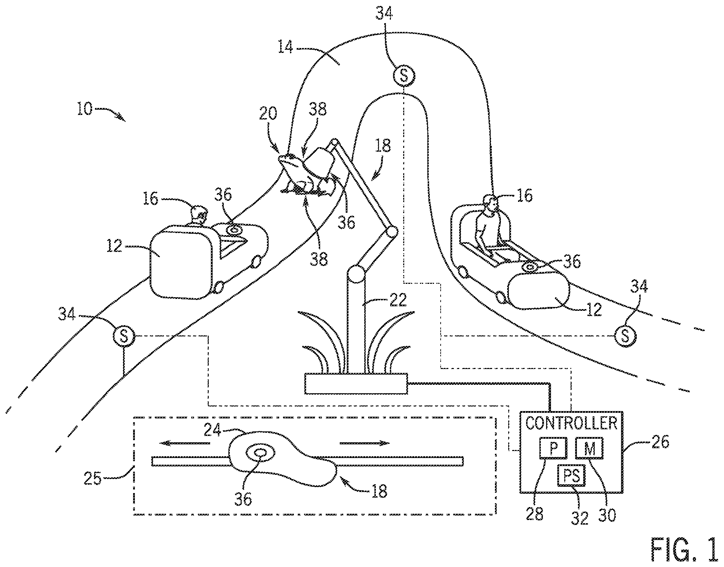

With the preceding in mind, FIG. 1 is a schematic view of a show-ride system 10, in accordance with embodiments discussed herein. As illustrated, the show-ride system 10 includes one or more ride vehicles 12 configured to traverse a pre-defined path 14 (e.g., track, rail, pathway, flume, chute) through the show-ride system 10. The ride vehicles 12 may be configured to transport or carry guests 16 along the pre-defined path 14, thereby enabling the guests 16 to receive visual and/or audio feedback from components of the show-ride system 10. The show-ride system 10 may also include show action equipment 18 configured to provide visual, audio, and/or haptic feedback for guests 16 transported through the show-ride system 10. In some embodiments, the show action equipment 18 may include one or more show structures 20 (e.g., animated figures, characters, screens, movable objects), one or more manipulators 22, and/or one or more show action props 24 (e.g., object, display, equipment) that interact with one another and/or with the ride vehicles 12 to provide an immersive experience to the guests 16. For example, the show structure 20 may correspond to a movable object (e.g., animated figure, character, interactive display) that may be transported by the manipulator 22 and may be operable to provide visual and/or audio feedback to the guests 16. In some embodiments, the show structure 20 may operate based on power and entertainment data received from a component of the show-ride system 10. For example, upon coupling to a particular ride vehicle 12, the manipulator 22, or the show action prop 24, the show structure 20 may receive power and entertainment data, thereby enabling the show structure 20 to operate and present to the guests 16 based on the entertainment data, as described in greater detail below. During operation, aspects of the show structure 20 may be fluidly, magnetically, and/or mechanically moved (e.g., moving an appendage, moving an arm, moving a leg, moving a body part), entertainment data may be displayed via an electronic display associated with the show structure 20, audio data may be output from a speaker associated with the show structure 20, aspects of the show structure 20 may be illuminated (e.g., eyes light up), or any combination thereof.

The manipulator 22 may correspond to movement equipment (e.g., movement mechanism (e.g., show action equipment movement system)) configured to transport the show structure 20 to a particular location within the show-ride system 10 (e.g., from a ride vehicle 12 to the show action prop 24, from the show action prop 24 to a ride vehicle 12, from a first ride vehicle 12 to a second ride vehicle 12). In some embodiments, the manipulator 22 may include arms and/or joints that enable the manipulator 22 to transport the show structure 20 about the show-ride system 10 with multiple degrees of freedom. Additionally, the arms and joints may enable the manipulator 22 to adjust a position and/or orientation of the show structure 20, thereby facilitating coupling to and/or securement of the show structure 20 with/to the ride vehicle(s) 12 and/or the show action prop 24 and transfer of the show structure 20 between the ride vehicles 12, the manipulator 22, and the show action prop 24, as described in greater detail below.

The show action prop 24 may correspond to show action equipment 18 that provides additional visual and/or audio feedback for the guests 16 transported through the show-ride system 10. For example, upon receiving the show structure 20 from the manipulator 22 and coupling with and/or securing to the show structure 20, the show action prop 24 may communicate entertainment data and provide power to the show structure 20, thereby enabling the show structure 20 to provide visual and/or audio feedback to the guests 16. Additionally, the show action prop 24 may operate using separate entertainment data (e.g., separate from the entertainment data used to control operation of the show character 20), thereby enabling the show action prop 24 to provide additional and/or different experiences to guests 16 transported through the show-ride system 10 (e.g., during periods when the show structure 20 is not coupled with and/or secured to the show action prop 24). For example, the show action prop 24 may include mechanical features that may be manipulated and/or moved by actuators associated with the show action prop 24. Additionally, the show action prop 24 may include speakers, lights, an electronic display, or the like, that may be activated based on control signals, regardless of whether the show structure 20 is coupled with and/or secured to the show action prop 24. In some embodiments, the show action prop 24 may be configured to move about a predefined area 25 (e.g., track, path, guideway, stage) within the show-ride system 10. That is, the show action prop 24 may be limited to a certain area or predefined path within the show-ride system 10 and may not be configured to couple with and/or secure to the manipulator 22 for transport.

As an example, the show structure 20 may correspond to a frog character and the additional show action prop 24 may correspond to a lily pad that moves about the show-ride system 10. During operation of the show-ride system 10, the frog 20 may be transported by the manipulator 22 to a particular ride vehicle 12. Further, the frog 20 may be actuated while coupled with and/or secured to the ride vehicle 12 to make it appear to be alive. Upon providing an experience (e.g., movement of the frog 20 on the ride vehicle 12, audio and/or light emission from the frog 20) to the guests 16 within the particular ride vehicle 12, the manipulator 22 may retrieve the frog 20 (e.g., couple with and/or secure to the frog 20 and simulate the frog jumping off of the ride vehicle 12) and place the frog 20 on the lily pad 24 or a different ride vehicle 12 such that additional ride vehicles 12 traversing the pre-defined path 14 may receive visual and/or audio feedback from the show structure 20. This may be done in a manner that conceals the nature of the transfer. It should be noted that while the show structure 20 is illustrated as a frog and the additional show action prop 24 is illustrated as a lily pad in FIG. 1, such embodiments are intended for illustrative purposes only, and other embodiments may include any type of show structure or character that may operate to provide visual and/or audio feedback to the guests 16 transported through the show-ride system 10. Further, while the manipulator 22 is illustrated as a movement mechanism having one or more arms and one or more joints, in some embodiments, the manipulator may also be configured to provide guests with an experience. That is, in some embodiments, the manipulator 22 may also operate to provide visual and/or audio feedback to guests on the show-ride system 10 regardless of whether the show structure 20 is coupled with and/or secured to the manipulator 22.

As noted above, the show structure 20 may receive entertainment data and/or power from the ride vehicle 12, the manipulator 22, or the show action prop 24 upon coupling with and/or securing to the respective component, thereby enabling the show structure 20 to operate to provide visual and/or audio feedback to the guests 16. For example, each of the ride vehicles 12, the manipulator 22, and the show action prop 24 may include (e.g., provide a conduit for) a power source that enables operation of the respective component. Upon coupling with and/or securing to the show structure 20, power from the power source of the respective component attached to the show structure 20 may be transferred through the component to the show structure 20 via induction, thereby enabling aspects of the show structure 20 to operate. Similarly, upon coupling with and/or securing to a respective component of the show-ride system 10 (e.g., the ride vehicle 12, the manipulator 22, or the show action prop 24), the show structure 20 may receive entertainment data from the respective component. The entertainment data may include instructions configured to cause the show structure 20 to perform specific functions (e.g., move mechanical components of the show structure 20, light up features of the show structure 20, cause the show structure 20 to provide audio feedback, and the like). In certain embodiments, entertainment data may be communicated through data communicators (e.g., data transceiver, data antenna, data transmitter) associated with each of the respective components of the show-ride system, while in other embodiments, entertainment data may be communicated via a direct coupling and/or securement, as described in greater detail below. Thus, upon receiving power and entertainment data from a respective component of the show-ride system 10, the show structure 20 may operate to present the entertainment data and provide visual and/or audio feedback to the guests 16. It should be noted that, in some embodiments, the show structure 20 may include a local power source (e.g., battery, power source housed within the show structure 20) and a controller having instructions stored thereon that cause the show structure 20 to operate to provide visual and/or audio feedback to the guests 16 without receiving entertainment data from the ride vehicle 12, the manipulator 22, or the show action prop 24.

In some embodiments, certain components of the show-ride system 10 discussed above (e.g., ride vehicle 12, show structure 20, manipulator 22, and/or show action equipment 24) may be communicatively coupled with a controller 26 configured to control operation of the show-ride system 10. The controller 26 may include a distributed control system or any computer-based system that is fully or partially automated. For example, the controller 26 may include a processor that may include processing circuitry 28 (e.g., a microprocessor(s)) that may execute instructions (e.g., software programs, algorithms, executable code) to perform the disclosed techniques. Moreover, the processor 28 may include multiple microprocessors, one or more "general-purpose" microprocessors, one or more special-purpose microprocessors, and/or one or more application specific integrated circuits (ASICS), or some combination thereof. The controller 26 may include a memory device 30 for storing instructions executable by the processing circuitry 28. Data stored on the memory device 30 may include, but is not limited to, algorithms for operation of the ride vehicle 12, the show structure 20, the manipulator 22, and/or the show action prop 24. For example, in some embodiments, the memory 30 may store the entertainment data used to operate the show structure, and may communicate the entertainment data to the ride vehicle 12, the manipulator 22, and/or the show action prop 24. In turn, upon the show structure 20 coupling with and/or securing to the ride vehicle 12, the manipulator 22, and/or the show action prop 24, the entertainment data communicated via the controller 26 may be transferred to the show structure 20, thereby enabling operation of the show structure 20. In some embodiments, entertainment data stored on the memory 30 may be sent directly to a local controller associated with the show structure 20, thereby enabling the show structure 20 to operate to present the entertainment data. Further, in some embodiments, the show structure 20 may store the entertainment data locally, and upon receiving power (e.g., via a coupling with and/or securement to the ride vehicle 12, via a coupling with and/or securement to the manipulator 22, via a coupling with and/or securement to the show action prop 24), the show structure 20 may operate to present the entertainment data to the guests 16.

In certain embodiments, the memory 30 may also store data indicative of an operating schedule of the show-ride system 10. For example, the show-ride system 10 may be configured to operate according to a program or schedule to provide the guests 16 with an immersive experience. The program or schedule may be stored on the memory 30 and may dictate the manner in which components of the show-ride system 10 operate and/or the time at which the components should operate. For example, the program may define a schedule (e.g., based on trigger events, such as the ride vehicle 12 passing a point on the pre-defined path 14) that specifies that the manipulator 22 should transport the show structure 20 to a particular location corresponding to a position of a first ride vehicle 12 at a specific point in time during a cycle of the show-ride system 10. At a second point in time during a cycle of the show-ride system 10, the schedule may specify that the manipulator 22 should retrieve the show structure 20 from the first ride vehicle 12 and transport the show structure 20 to the show action prop 24. At a third point in time, the schedule may specify that the manipulator 22 should retrieve the show structure 20 from the show action prop 24 and transport the show structure 20 to a second ride vehicle 12, thus completing the cycle. In this way, the controller 26 may control the various components of the show-ride system 10 based on the instructions stored on the memory 30. The memory 30 may include a tangible, non-transitory, machine-readable medium, such as a volatile memory (e.g., a random access memory (RAM)) and/or a nonvolatile memory (e.g., a read-only memory (ROM), flash memory, a hard drive, or any other suitable optical, magnetic, or solid-state storage medium, or a combination thereof).

Additionally, in some embodiments, the controller 26 may include a positioner 32 (e.g., positioning system) that may be configured to determine spatial relationships between components of the show-ride system, thereby enabling the positioner 32 to operate the manipulator 22 based on the determined spatial relationships. For example, the positioner 32 may receive sensor data from one or more sensors 34 disposed about the show-ride system 10. The sensors 34 may record data indicative of a position or location of a particular ride vehicle 12, a speed of a particular ride vehicle 12, a position of the show structure 20, a position of the manipulator 22, a position of the additional show action prop 24, or any combination thereof. Using the sensor data and/or the data stored on the memory 30, the positioner 32 may determine an expected position of a ride vehicle 12, thereby enabling the manipulator 22 to transfer the show structure 20 to the expected position such that the show structure 20 may be coupled with and/or secured to the ride vehicle 12. Similarly, upon receiving an indication that the ride vehicle 12 having the show structure 20 thereon has passed a particular location in the show-ride system 10, the positioner 32 may instruct the manipulator 22 to retrieve the show structure 20 based on a determined expected position of the ride vehicle 12 having the show structure 22 attached thereto. Further, in some embodiments, the positioner 32 may determine an expected position of the show action prop 24, thereby enabling the manipulator 22 to transport the show structure 20 to the show action prop 24 or retrieve the show structure 20 from the show action prop 24. In certain embodiments, the positioner 32 may operate based on various detectable features associated with the show-ride system 10. For example, the positioner 32 may utilize data retrieved from cameras disposed about the show-ride system 10 to determine the spatial relationships between the various components of the show-ride system 10. Additionally, the positioner 32 may utilize barcodes, radio frequency identification (RFID) tags, global positioning system (GPS) coordinates, and the like, associated with each of the components of the show-ride system 10, thereby enabling the positioner 32 to determine positional relationships of the components of the show-ride system 10 relative to one another. In this way, the manipulator 22 may be operated based on the sensed data from the positioner 32 to transport the show structure 20 about the show-ride system 10.

As illustrated in FIG. 1, each of the ride vehicles 12, the manipulator 22, and the additional show action prop 24 may include a coupler 36 (e.g., coupling assembly, coupling mechanism, coupling component, securer (e.g., securing assembly, securing mechanism, securing component)). Further, the show structure 20 may include one or more show structure couplers 38 (e.g., coupling assemblies, coupling mechanisms, coupling components, securers (e.g., securing assemblies, securing mechanisms, securing components)). During operation and to facilitate transport of and/or coupling with and/or securing to the show structure 20, a respective coupler 36 of the ride vehicle 12, the manipulator 22, and/or the show action prop 24 may be configured to interact with one of the show structure couplers 38, thereby enabling a removable coupling and/or securing between the show structure 20 and the ride vehicle 12, the manipulator 22, or the additional show action prop 24. In some embodiments, the couplers 36 of the ride vehicles 12, the manipulator 22, and the additional show action prop 24 may include additional components (e.g., magnets, power induction coil, data communicator) that enable power and/or data to be transferred therethrough such that upon a coupling and/or securing between a respective coupler 36 and a show structure coupler 38, the show structure 20 may be powered and may provide visual and/or audio feedback to guests 16 within the show-ride system 10 (e.g., based on the data communicated to the show structure 20). Thus, when the show structure 20 is coupled with and/or secured to a respective ride vehicle 12, the respective ride vehicle 12 may communicate data and transfer power to the show structure 20, thereby enabling the show structure 20 to provide visual and/or audio feedback, as described in greater detail below.

Similarly, when the show structure 20 is coupled with and/or secured to a respective show action prop 24, the show action prop 24 may communicate data and transfer power to the show structure 20 (e.g., via the coupling and/or securement between a respective coupler 36 and a show-ride coupler 38), such that the show structure 20 continues to provide visual and/or audio feedback while the show structure 20 is coupled with and/or secured to the show action prop 24. Further still, when the show structure 20 is coupled with and/or secured to the manipulator 22, the manipulator 22 may communicate data and transfer power to the show structure 20 (e.g., via the coupler 36), thereby enabling the show structure 20 to continue providing visual and/or audio feedback to guests 16 within the show-ride system 10 while the show structure 20 is transported to a different location by the manipulator 22. In this way, guests 16 experiencing the show-ride system 10 may be provided with an immersive experience having substantially seamless transitions (e.g., amount of interruptions due to lack of data transfer and/or power transfer to the show structure 20 is less than a threshold amount, show structure is inoperative (e.g., not receiving power and/or data) for less than a threshold amount of time), thereby improving an experience of the guests 16.

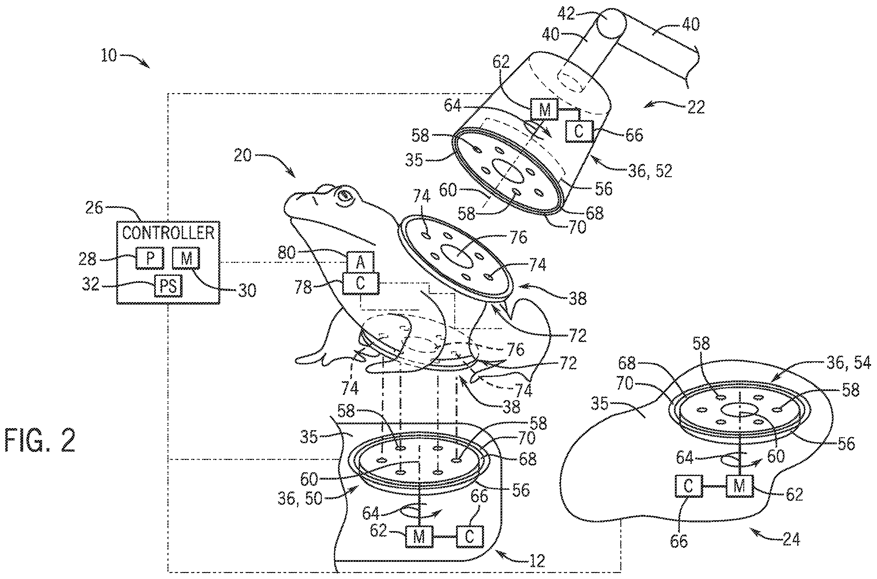

FIG. 2 illustrates a schematic view of an embodiment of various portions of the show-ride system 10 of FIG. 1. As noted above, during operation of the show-ride system 10, one of the show structure couplers 38 of the show structure 20 may couple with and/or secure to the coupler 36 of the ride vehicle 12, the manipulator 22, or the show action prop 24, respectively. For example, the coupler 36 associated with the ride vehicle 12 may correspond to a base coupler 50, the coupler 36 associated with the manipulator 22 may correspond to a transport coupler 52, and the coupler 36 associated with the show action prop 24 may correspond to a prop coupler 54. As discussed herein, a coupler 36 (e.g., a base coupler 50, a transport coupler 52, and a prop coupler 54) may also be referred to as a coupling assembly, coupling mechanism, coupling device, securer (e.g., securing assembly, securing mechanism, securing device) configured to interact (e.g., couple) with a show structure coupler 38. Each of the couplers 36 may be positioned on an exterior surface 35 of the respective component associated with the coupler 36 (e.g., the ride vehicle 12, the manipulator 22, the show action prop 24) and may be configured to facilitate coupling with and/or securing to the show structure 20 to provide power and/or communicate entertainment data to the show structure 20, thereby enabling the show structure 20 to provide visual and/or audio feedback to the guests 16.

Each coupler 36 (e.g., base coupler 50, transport coupler 52, prop coupler 54) may include a base plate 56 having one or more magnets 58 (e.g., rare earth magnets, electromagnets) arranged about a central axis 60 of the base plate 56. The base plate 56 may be coupled with and/or secured to a motor 62 via a shaft 64, and the motor 62 may be configured to translate and/or orient (e.g., rotate) the base plate 56 based on control signals from the controller 26 and/or a local controller 66 (e.g., processor-based controller) associated with the respective coupler 36. For example, the controller 26 may be communicatively coupled with the controller 66 and may send control signals to the controller 66 to operate the motor 62 to translate and/or orient the base plate 56, thereby enabling translation and/or orientation of the one or more magnets 58. Additionally, each coupler 36 may also include a power induction coil 68 configured to provide power to the show structure 20 (e.g., via induction) and a data communicator 70 (e.g., data antenna assembly (e.g., data antenna, data transceiver, data transmitter) cable coupling) configured to communicate entertainment data to the show structure 20. In some embodiments, the power induction coil 68 may circumscribe the one or more magnets 58, and the data communicator 70 may circumscribe the power induction coil 68. However, it should be noted that the position of the power induction coil 68 and/or the data communicator 70 is not limited to the positions discussed above. For example, in some embodiments, the power induction coil 68 may circumscribe both the data communicator 70 and the magnets 58, while in other embodiments, the data communicator 70 may be located within a threshold distance of the base plate 56, thereby enabling the data communicator 70 to communicate the entertainment data to the show structure 20. Further, while the data communicator 70 is illustrated as a data antenna, in certain embodiments, data may be communicated through the data communicator 70 via a direct coupling and/or securement.

Each of the show structure couplers 38 (e.g., show structure coupler, show structure securer) of the show structure 20 may be positioned on an exterior surface of the show structure 20 and may include a mounting plate 72 having one or more magnets 74 arranged about a central axis 76 of the mounting plate 72. However, unlike the base plate 56 of a respective coupler 36 (e.g., base coupler 50, transport coupler 52, prop coupler 54), the mounting plate 72 of a respective show structure coupler 38 may be fixed relative to the show structure 20. In this way, translation and/or orientation (e.g., rotation) of the magnets 58 on a respective base plate 56 relative to the magnets 74 of a respective mounting plate 72 may cause the magnets 58 and 74 to align or offset from one another, thereby facilitating coupling (and/or securement) or disengagement, respectively, between the show structure 20 and other components of the show-ride system 10.

For example, during a cycle of the show-ride system 10, the show structure 20 may be transported from a first ride vehicle 12 to a show action prop 24 or to a second ride vehicle 12 via the manipulator 22. Thus, at a first point in time, the show structure 20 may be coupled with and/or secured to the ride vehicle 12 via a coupling and/or securement between the base coupler 50 and a first show structure coupler 38 (e.g., lower show structure coupler). Upon receiving an instruction to transport the show structure 20, the transport coupler 52 of the manipulator 22 may be positioned proximate a second show structure coupler 38 (e.g., upper show structure coupler 38). As the transport coupler 52 approaches the second show structure coupler 38, the base plate 56 of the transport coupler 52 may translate and/or orient (e.g., rotate) to align the magnets 58 of the transport coupler 52 with the magnets 74 of the second show structure coupler 38, thereby facilitating a coupling and/or securement between the manipulator 22 and the show structure 20. Further, upon determining that a proper coupling between the transport coupler 52 and the second show structure coupler 38 has been achieved, the controller 26 may send a signal to translate and/or orient (e.g., rotate) the base plate 56 of the base coupler 50, thereby causing the magnets 58 of the base coupler 50 to translate and/or orient (e.g., rotate) out of phase (e.g., offset) with the magnets 74 of the first show structure coupler 38. As the magnets 58 of the base coupler 50 are translated and/or oriented (e.g., rotated) out of phase with the magnets 74 of the first show structure coupler 58, the show structure 20 may disengage from the ride vehicle 12 and may be transported to a different location within the show-ride system 10 by the manipulator 22.

Similarly, upon receiving an instruction to transport the show structure 20 to the show action prop 24, the manipulator 22 may position the show structure 20 such that the first show structure coupler 38 is proximate the prop coupler 54. As the show structure 20 approaches the show action prop 24, the base plate 56 of the prop coupler 54 may translate and/or orient (e.g., rotate) to align the magnets 58 of the prop coupler 54 with the magnets 74 of the first show structure coupler 38, thereby facilitating a coupling and/or securement between the show action prop 24 and the show structure 20. Further, upon determining that a proper coupling between the show structure 20 and the show action prop 24 has been achieved, the controller 26 may send a signal to translate and/or orient (e.g., rotate) the base plate 56 of the transport coupler 52, thereby causing the magnets 58 of the transport coupler 52 to translate and/or orient (e.g., rotate) out of phase with the magnets 74 of the second show structure coupler 38. As the magnets 58 of the transport coupler 52 are translated and/or oriented (e.g., rotated) out of phase with the magnets 74 of the second show structure coupler 38, the show structure may disengage from the manipulator 22 and may operate using power and entertainment data transferred from the prop coupler 54 of the show action prop 24. In this way, as the manipulator 22 releases the show structure 20, the show structure 20 may be secured to the show action prop 24, and may provide visual and/or audio feedback to the guests 16.

It should be noted that while the show structure 20 is illustrated as being uncoupled with both the manipulator 22 and the ride vehicle 12 in FIG. 2, such an embodiment is intended for illustrative purposes only, and it should be understood that during operation, at least one of the show structure couplers 38 may be coupled with and/or secured to a respective coupler 36 of the show-ride system 10, thereby enabling the show structure 20 to operate to provide visual and/or audio feedback to the guests 16. Additionally, while FIG. 2 illustrates each coupler 36 and each show structure coupler 38 being associated with six magnets, in other embodiments, any suitable number of magnets (e.g., one, two, three, four, five, six, seven, eight, or more) may be used to facilitate a coupling and/or securement between the show structure 20 and a component of the show-ride system 10. Further, in some embodiments, the mounting plate 72 of a show structure coupler 38 may be a stainless steel plate, and the ride vehicle 12, the manipulator 22, or the show action prop 24 may include an electromagnet that may interact with the mounting plate 72 to facilitate a coupling and/or a securement between a respective coupler 36 and a respective show structure coupler 38.

In some embodiments, the show structure 20 may also include a local controller 78 and a data receiver 80 (e.g., data transmission assembly (e.g., data antenna, data transmitter, data transceiver) configured to facilitate operation of the show structure 20. For example, as noted above, upon a proper coupling and/or securement between a respective coupler 36 and a show structure coupler 38, the respective coupler 36 may be configured to transfer power and/or entertainment data to the show structure 20 to operate the show structure 20. That is, the data communicator 70 of a respective coupler 36 may receive entertainment data from the controller 26 and may communicate the entertainment data to the local controller 78 (e.g., processor-based controller) of the show structure 20 over any suitable network, thereby enabling the show structure 20 to present the entertainment data communicated thereto. In certain embodiments, the data receiver 80 of the show structure 20 may be configured to facilitate the reception and/or transmission of the entertainment data that is communicated to the show structure 20. For example, the data receiver 80 may be a data transmission assembly (e.g., data transceiver) that includes a data antenna for receiving data from a respective data communicator 70 and a data transmitter for communicating data to the local controller 78. The network may be any suitable wired or wireless (e.g., radio or light based) network that may facilitate communication of data between components of the show-ride system 10. In some embodiments, the network may be a Wi-Fi network, a light detection and ranging (LIDAR) network, a LIDAR device, a 4G network, a 4G LTE network, a 5G network, a Bluetooth network, a Near Field Communication (NFC) network, or any suitable network for communicating information between the show structure 20 and the ride vehicle 12, the manipulator 22, or the show action equipment 24. For example, the entertainment data may be communicated over a near field communication network such that entertainment data may not be transferred until a proper coupling between a respective coupler 36 and a respective show structure coupler 38 is achieved. As discussed herein, a "proper coupling" may refer to a coupling and/or securement between a respective coupler 36 and a respective show structure coupler 38 that limits an amount of movement of the show structure 20 relative to the component attached thereto by less than a threshold amount. For example, while the show structure 20 may be configured to operate and move based on entertainment data communicated to the show structure 20, a proper coupling may correspond to a coupling and/or securement that limits an amount of movement between a respective show structure coupler 38 and a respective coupler 36. Thus, a proper coupling may be achieved when the magnets 58 of a coupler are aligned with and coupled with the magnets 74 of a show structure coupler 38.

In some embodiments, the local controller 78 may store the entertainment data needed to operate the show structure 20, and upon receiving power from a respective coupler 36 (e.g., via the power induction coil 68), the show structure 20 may present the entertainment data stored on the local controller 78. Further, as noted above, in some embodiments, the show structure 20 may also include a local power source (e.g., battery) that enables the show structure 20 to operate. Thus, in some embodiments, each of the couplers 36 may be configured to couple and/or secure the show structure 20 with/to a respective component of the show-ride system 10 and/or facilitate transport of the show structure 20 about the show-ride system 10 without communicating data and/or power to the show structure 20. Further, in some embodiments, the couplers 36 discussed above may correspond to any type of coupling assembly, coupling mechanism, coupling device, securer (e.g., securing assembly, securing mechanism, securing device) that may enable a removable coupling and/or securement between the show structure 20 and components of the show-ride system 10. For example, in some embodiments, the coupler 36 may correspond to a piece of hook and loop assembly, adhesive, or the like, and the show structure 20 may be configured to couple with and/or secure to the coupler 36 to couple and/or secure the show structure with/to a component of the show-ride system 10.

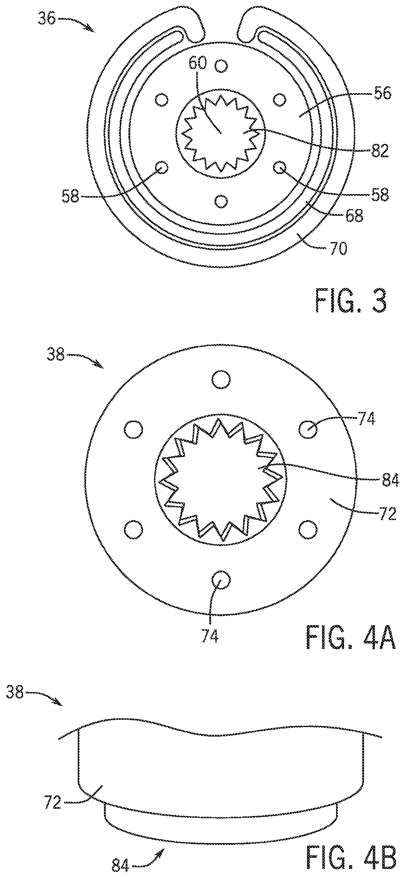

FIG. 3 illustrates an embodiment of a perspective view of a coupler 36 which may be associated with a ride vehicle 12, a manipulator 22, and/or a show action prop 24. As noted above, each coupler 36 may include the base plate 56 having the one or more magnets 58 arranged about the central axis 60. Additionally, in some embodiments, each coupler 36 may include a recess 82 (e.g., keyed recess) that may interact with a key 84 (e.g., protrusion, key design) of a show structure 20, as show in FIGS. 4A and 4B, to facilitate the coupling and/or securement between the show structure 20 and a respective coupler 36.

For example, FIG. 3 illustrates the recess 82 (e.g., keyed recess) which may be machined into the base plate 56 of the respective coupler 36 about the central axis 60. The recess 82 may have a width extending across a surface of the base plate 56 and a depth extending into the surface of the base plate 56. The recess 82 may also have a geometry that enables a respective key 84 (e.g., protrusion) of a show structure coupler 38 to interact with and/or engage the recess 82. For example, as illustrated in FIGS. 3 and 4A, the recess 82 may have a star-shaped geometry having 16 points, and the key 84 may have a corresponding geometry that enables the key 84 to interact with and/or engage the recess 82. In certain embodiments, the key 84 may have fewer points or vertices than the recess 82. For example, in some embodiments, the recess 82 may have a pentagon-shaped geometry having five vertices and the key 84 may have a square-shaped geometry having four vertices. In this way, a limited amount of permitted movement (e.g., within a threshold amount of movement) between the show structure coupler 38 and the coupler 36 may be enabled while still facilitating a proper coupling between the show structure coupler 38 and the coupler 36.

In certain embodiments, the recess 82 may be a stepped recess having multiple (e.g., two or more) levels with the same or different geometries etched into the recess 82 at varying depths. For example, the recess 82 may have a first portion etched into the recess at a first depth and the first portion may have a circular shaped geometry that interacts with a circular first portion of the key 84. Additionally, the recess 82 may have a second portion etched into the recess 82 at a second depth that is greater than the first depth, and the second portion may have a star-shaped geometry that interacts with a star-shaped second portion of the key 84. In this way, the first portion of the recess 82 may engage with the first portion of the key 84 to facilitate an initial coupling between the recess 82 and the key 84. That is, the interaction between the first portion of the recess 82 and the first portion of the key 84 may facilitate an alignment between the coupler 36 and the show structure coupler 38, thereby enabling the second portion of the key 84 (e.g., a star-shaped portion) to engage with the second portion of the recess 82 (e.g., the star shaped recess).

It should be noted that while the recess 82 is illustrated as having a star-shape geometry, in other embodiments, the recess 82 may take on other geometries to facilitate the coupling and/or securement between a coupler 36 and a show structure coupler 38. Specifically, the recess 82 and the key 84 may be shaped to facilitate a desired alignment and may also facilitate coordinated translation and/or orientation (e.g., rotation) of both the coupler 32 and the show structure 20. It should be noted that, in an embodiment, the show structure 20 may include the recess and the coupler 36 may include the key 84.

FIGS. 4A and 4B illustrate different views of the key 84 of a show structure coupler 38 that may be configured to engage with the recess 82 of a coupler 36 to couple and/or secure the show structure 20 to a ride vehicle 12, a manipulator 22, or a show action prop 24. In some embodiments, engagement of the key 84 with the recess 82 may further facilitate the alignment of the magnets 58 and 74. For example, in certain embodiments, the key 84 may extend from a surface of the mounting plate 72 and may be configured to engage with the recess 82 of a respective coupler 36 before the magnets 74 of the show structure coupler 38 couple with the magnets 58 of the coupler 36. Thus, in certain embodiments, a height and/or length of the key 84 may be based on a depth of the recess 82. As the key 84 engages with the recess 82, the magnets 74 of the show structure coupler 38 may be aligned with the magnets 58 of the coupler 36. Additionally, engagement of the key 84 with the recess 82 may facilitate disengagement of a respective coupler 36 with a respective show structure coupler 38. For example, as noted above, during disengagement between a respective coupler 36 and a respective show structure coupler 38, the base plate 56 of the respective coupler 36 may translate and/or orient (e.g., rotate), thereby causing the magnets 58 of the coupler to translate and/or orient (e.g., rotate). Because the key 84 of the show structure coupler 38 is engaged with the recess 82 of the coupler 36, as the base plate 56 of the coupler 36 (and thus the magnets 58) are translated and/or oriented (e.g., rotated), the show structure 20 may remain fixed relative to the coupler 36, thereby enabling the magnets 58 of the coupler 36 to be translated and/or oriented (e.g., rotated) out of phase with the magnets 74 of the show structure coupler 38. In this way, a respective coupler 36 may be disengaged with a show structure coupler 38, thereby enabling the show structure 20 to be transported or transferred to a different component of the show-ride system 10.

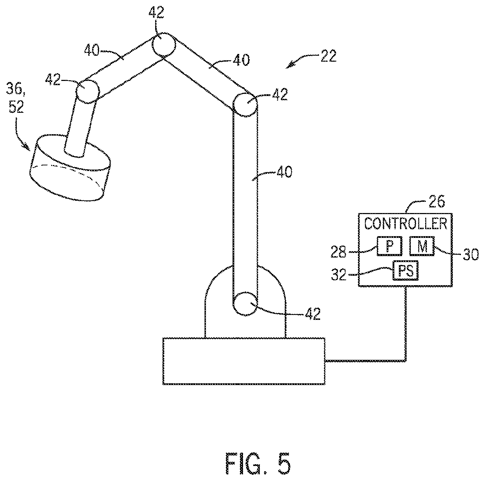

As noted above, the manipulator 22 may include one or more arms and one or more joints that enable the manipulator 22 to move relative to the ride vehicles 12, the show structure 20, the show action prop 24, or any combination thereof. For example, FIG. 5 is a perspective view of an embodiment of the manipulator 22 communicatively coupled with the controller 26, thereby enabling the controller 26 to control a position of the transport coupler 52 of the manipulator 22. During operation of the show-ride system 10, the manipulator 22 may be configured to couple to and/or secure to a show structure 20 (e.g., via the coupler 36), provide power and/or data to the show structure 20 (e.g., via the coupler 36), transport the show structure 20 to a desired location (e.g., to a ride vehicle 12 from a show action prop 24, to a show action prop 24 from a ride vehicle 12), and detach from the show structure 20. For example, upon receiving instructions to transport the show structure 20 from a ride vehicle 12 to a show action prop 24, the manipulator 22 may receive coordinates from the controller 26 corresponding to an expected position of the show structure 20 on the ride vehicle 12, thereby enabling the manipulator 22 to position the coupler 36 in a location that facilitates a coupling and/or securement between the show structure 20 and the manipulator 22. Upon coupling and/or securing the show structure 20 with/to the manipulator 22, the controller 26 may provide coordinates to the manipulator 22 that specify an expected location or position of the show action prop 24, thereby enabling the manipulator to transport the show structure 20 to the show action prop 24.

The manipulator 22 may include a number of arms 40 and a number of joints 42 configured to facilitate manipulation or movement of the coupler 36 with multiple (e.g., six) degrees of freedom to facilitate a coupling and/or securement between the manipulator 22 and the show structure 20. Indeed, the manipulator 22 may move the coupler 36 with any suitable degree(s) of freedom, such as 1, 2, 3, 4, 5, or 6 degrees of freedom. Further, as noted above, the controller 26 (e.g., an electronic and/or processor-based controller, automation controller, control system) may be utilized to control operation of the manipulator 22. For example, the controller 26 may control the position and movements of the arms 40 and the joints 42 to adjust a position of the coupler 36 based on expected locations of the various components within the show-ride system 10. In some embodiments, the controller 26 may utilize the positioner 32 to determine expected locations of various components within the show-ride system 10, thereby enabling the controller 26 to control a position of the manipulator 22 accordingly. In some embodiments, the controller 26 may also control the power and data transfer that is communicated through the coupler 36 to the show structure 20 when the manipulator 22 is coupled with and/or secured to the show structure 20.

The techniques presented and claimed herein are referenced and applied to material objects and concrete examples of a practical nature that demonstrably improve the present technical field and, as such, are not abstract, intangible or purely theoretical.

While only certain features of disclosed embodiments have been illustrated and described herein, many modifications and changes will occur to those skilled in the art. The scope of the invention is defined by the appended claims.

## Claims

1. An amusement park ride system, comprising:
one or more ride vehicles (12) configured to transport passengers, wherein each ride vehicle (12) of the one or more ride vehicles includes an exterior surface and a base coupler (50) disposed on or accessible via the exterior surface;
a show structure (20) configured to operate for viewing by the passengers, wherein the show structure (20) comprises:
a first coupler configured to removably couple with and/or secure to a respective base coupler (50) of a ride vehicle (12) of the one or more ride vehicles; and
a second coupler; and
a manipulator (22) configured to couple with and/or secure to the show structure (20) and transport the show structure (20) to and from the ride vehicle (12) of the one or more ride vehicles, wherein the manipulator (22) comprises a transport coupler (52) configured to removably couple with and/or secure to the second coupler.

2. The amusement park ride system of Claim 1, wherein the base coupler (50) comprises:
a base plate (56) comprising one or more magnets (58);
a motor (62) coupled with and/or secured to the base plate (56) and configured to translate and/or orient the base plate; and
a power induction coil (68) configured to provide power to the show structure (20) in response to the show structure (20) coupling with and/or securing to the ride vehicle of the one or more ride vehicles (12).

3. The amusement park ride system of Claim 2, wherein the show structure (20) comprises an animated figure configured to operate based on receiving power from the power induction coil (68).

4. The amusement park ride system of Claim 2, wherein the show structure (20) is configured to operate based on data and wherein the base coupler (50) comprises an antenna configured to transmit the data to the show structure (20); and optionally
wherein the power induction coil (68) circumscribes the one or more magnets, and wherein the antenna circumscribes the power induction coil.

5. The amusement park ride system of Claim 2, wherein the first coupler comprises a first mounting plate (72) comprising one or more additional magnets (74) configured to align with the one or more magnets (58) of the base coupler (50) to couple the show structure (20) with the ride vehicle (12) and/or secure the show structure (20) to the ride vehicle; and optionally
wherein the one or more additional magnets (74) of the first coupler are fixed relative to the show structure (20), and wherein the one or more magnets (58) of the base coupler (50) are translatable and/or able to be oriented relative to the one or more additional magnets of the first coupler.

6. The amusement park ride system of Claim 2, wherein translation and/or orientation of the base plate (56) via the motor (62) is configured to disengage the show structure (20) from the ride vehicle (12).

7. The amusement park ride system of Claim 2, wherein the transport coupler (52) comprises:
an additional base plate comprising one or more additional magnets;
an additional motor coupled with and/or secured to the additional base plate and configured to translate and/or orient the additional base plate; and
an additional power induction coil (68) configured to provide power to the show structure (20) in response to the show structure (20) coupling with and/or securing to the transport coupler (52); and optionally
wherein the transport coupler (52) comprises an antenna configured to transmit data to the show structure (20).

8. The amusement park ride system of Claim 1, wherein the first coupler comprises a key configured to engage with a recess of the base coupler (50) of the ride vehicle (12) to facilitate coupling the show structure (20) with the ride vehicle (12) and/or to facilitate securing the show structure (20) to the ride vehicle (12).

9. The amusement park ride system of Claim 1, wherein the base coupler (50) comprises a first plurality of magnets, wherein the first coupler comprises a second plurality of magnets, wherein the first plurality of magnets and the second plurality of magnets are configured to align and engage with one another to couple the show structure (20) with the ride vehicle (12) and/or secure the show structure (20) to the ride vehicle (12).

10. The amusement park ride system of Claim 1, wherein translation and/or orientation of the base coupler (50) relative to the first coupler is configured to offset a plurality of magnets of the base coupler (50) relative to a plurality of magnets of the first coupler to engage or disengage the show structure (20) to or from the ride vehicle (12).

11. The amusement park ride system of Claim 1, wherein the show structure (20) comprises an animated figure configured to be actuated based on power received via the first coupler, the second coupler, or both.

12. A manipulator (22) for a show-ride system, the manipulator (22) comprising:
one or more arms and one or more joints configured to enable movement of the manipulator (22); and
a transport coupler (52) coupled with and/or secured to an arm of the one or more arms and configured to removably couple with and/or secure to a show structure coupler (38) of a show structure (20), wherein the transport coupler (52) comprises:
a base plate (56) comprising one or more magnets (58);
a motor (62) coupled with and/or secured to the base plate and configured to translate and/or orient the base plate (56);
a power induction coil (68) configured to provide power to the show structure (20) in response to the transport coupler (52) coupling with and/or securing to the show structure coupler (38); and
a data communicator (70) configured to communicate data to the show structure (20) in response to the transport coupler (52) coupling with and/or securing to the show structure coupler (38).

13. The manipulator of Claim 12, wherein the power induction coil (68) circumscribes the one or more magnets, wherein the data communicator comprises (70) an antenna, and wherein the antenna circumscribes the power induction coil (68); or.
wherein the one or more magnets of the base plate are configured to align with one or more additional magnets associated with the show structure (20) to couple the show structure (20) to the manipulator (22) and/or to secure the show structure (20) to the manipulator (22).

14. A show structure (20) configured to operate for viewing by passengers, the show structure (20) comprising:
a first coupler positioned at a first location on the show structure (20), wherein the first coupler is accessible by a base coupler (50) of a ride vehicle (12) or a prop coupler of a show action prop and is configured to removably couple the show structure with the ride vehicle (12) or the show action prop and/or removably secure the show structure to the ride vehicle (12) or the show action prop; and
a second coupler positioned at a second location on the show structure (20), wherein the second coupler is accessible by a transport coupler (52) of a manipulator and is configured to removably couple the show structure with the manipulator and/or removably secure the show structure to the manipulator,
wherein each of the first coupler and the second coupler include a base plate comprising one or more magnets configured to align with one or more additional magnets of the base coupler (50), the transport coupler (52), or the prop coupler to couple the show structure (20) with the ride vehicle (12), the manipulator (22), or the show action prop, respectively and/or to secure the show structure to the ride vehicle (12), the manipulator (22), or the show action prop, respectively.

15. The show structure of Claim 14, wherein the show structure comprises an animated figure configured to operate based on receiving power from a power induction coil (68)of the ride vehicle (12), the manipulator (22), or the show action prop; or
wherein the show structure is configured to operate based on data received from a data communicator (70) of the base coupler (50), the transport coupler (52), or the prop coupler.

## Patentansprüche

1. Vergnügungsparkfahrgeschäftssystem, umfassend:
ein oder mehrere Fahrgeschäftsfahrzeuge (12), die zum Transportieren von Passagieren konfiguriert sind, wobei jedes Fahrgeschäftsfahrzeug (12) des einen oder der mehreren Fahrgeschäftsfahrzeuge eine Außenoberfläche und einen Basiskoppler (50), der an der Außenoberfläche angeordnet oder über die Außenoberfläche zugänglich ist, einschließt;
eine Show-Struktur (20), die konfiguriert ist, um zur Betrachtung durch die Passagiere betrieben zu werden, wobei die Show-Struktur (20) umfasst:
einen ersten Koppler, der konfiguriert ist, um sich lösbar mit einem jeweiligen Basiskoppler (50) eines Fahrgeschäftsfahrzeugs (12) des einen oder der mehreren Fahrgeschäftsfahrzeuge zu koppeln und/oder an diesem befestigt zu sein; und
einen zweiten Koppler; und
einen Manipulator (22), der konfiguriert ist, um sich mit der Show-Struktur (20) zu koppeln und/oder an dieser befestigt zu sein und die Show-Struktur (20) zu und von dem Fahrgeschäftsfahrzeug (12) des einen oder der mehreren Fahrgeschäftsfahrzeuge zu transportieren, wobei der Manipulator (22) einen Transportkoppler (52) umfasst, der konfiguriert ist, um sich lösbar mit dem zweiten Koppler zu koppeln und/oder an diesem befestigt zu sein.

2. Vergnügungsparkfahrgeschäftssystem nach Anspruch 1, wobei der Basiskoppler (50) umfasst:
eine Bodenplatte (56), umfassend einen oder mehrere Magnete (58);
einen Motor (62), der mit der Bodenplatte (56) gekoppelt und/oder an dieser befestigt ist und konfiguriert ist, um die Bodenplatte zu verschieben und/oder auszurichten; und
eine Leistungsinduktionsspule (68), die konfiguriert ist, um der Show-Struktur (20) Leistung bereitzustellen, als Reaktion darauf, dass sich die Show-Struktur (20) mit dem Fahrgeschäftsfahrzeug des einen oder der mehreren Fahrgeschäftsfahrzeuge (12) koppelt und/oder an diesem befestigt wird.

3. Vergnügungsparkfahrgeschäftssystem nach Anspruch 2, wobei die Show-Struktur (20) eine animierte Figur umfasst, die konfiguriert ist, um basierend auf dem Empfang von Leistung von der Leistungsinduktionsspule (68) betrieben zu werden.

4. Vergnügungsparkfahrgeschäftssystem nach Anspruch 2, wobei die Show-Struktur (20) konfiguriert ist, um basierend auf Daten betrieben zu werden, und wobei der Basiskoppler (50) eine Antenne umfasst, die konfiguriert ist, um die Daten an die Show-Struktur (20) zu übertragen; und wahlweise
wobei die Leistungsinduktionsspule (68) den einen oder die mehreren Magnete umgibt, und wobei die Antenne die Leistungsinduktionsspule umgibt.

5. Vergnügungsparkfahrgeschäftssystem nach Anspruch 2, wobei der erste Koppler eine erste Montageplatte (72) umfasst, umfassend einen oder mehrere zusätzliche Magnete (74), die konfiguriert sind, um sich mit dem einen oder den mehreren Magneten (58) des Basiskopplers (50) auszurichten, um die Show-Struktur (20) mit dem Fahrgeschäftsfahrzeug (12) zu koppeln und/oder die Show-Struktur (20) an dem Fahrgeschäftsfahrzeug zu befestigen; und wahlweise
wobei der eine oder die mehreren zusätzlichen Magnete (74) des ersten Kopplers relativ zu der Show-Struktur (20) fixiert sind, und wobei der eine oder die mehreren Magnete (58) des Basiskopplers (50) relativ zu dem einen oder den mehreren zusätzlichen Magneten des ersten Kopplers verschiebbar und/oder ausrichtbar sind.

6. Vergnügungsparkfahrgeschäftssystem nach Anspruch 2, wobei die Verschiebung und/oder Ausrichtung der Bodenplatte (56) über den Motor (62) konfiguriert ist, um die Show-Struktur (20) von dem Fahrgeschäftsfahrzeug (12) zu lösen.

7. Vergnügungsparkfahrgeschäftssystem nach Anspruch 2, wobei der Transportkoppler (52) umfasst:
eine zusätzliche Bodenplatte, umfassend einen oder mehrere zusätzliche Magnete;
einen zusätzlichen Motor, der mit der zusätzlichen Bodenplatte gekoppelt und/oder an dieser befestigt ist und konfiguriert ist, um die zusätzliche Bodenplatte zu verschieben und/oder auszurichten; und
eine zusätzliche Leistungsinduktionsspule (68), die konfiguriert ist, um der Show-Struktur (20) Leistung bereitzustellen, als Reaktion darauf, dass die Show-Struktur (20) mit dem Transportkoppler (52) gekoppelt und/oder an diesem befestigt wird; und wahlweise
wobei der Transportkoppler (52) eine Antenne umfasst, die konfiguriert ist, um Daten an die Show-Struktur (20) zu übertragen.

8. Vergnügungsparkfahrgeschäftssystem nach Anspruch 1, wobei der erste Koppler einen Keil umfasst, der konfiguriert ist, um in eine Aussparung des Basiskopplers (50) des Fahrgeschäftsfahrzeugs (12) einzugreifen, um das Koppeln der Show-Struktur (20) mit dem Fahrgeschäftsfahrzeug (12) zu erleichtern und/oder um das Befestigen der Show-Struktur (20) an dem Fahrgeschäftsfahrzeug (12) zu erleichtern.

9. Vergnügungsparkfahrgeschäftssystem nach Anspruch 1, wobei der Basiskoppler (50) eine erste Vielzahl von Magneten umfasst, wobei der erste Koppler eine zweite Vielzahl von Magneten umfasst, wobei die erste Vielzahl von Magneten und die zweite Vielzahl von Magneten konfiguriert sind, um sich aneinander auszurichten und ineinander einzugreifen, um die Show-Struktur (20) mit dem Fahrgeschäftsfahrzeug (12) zu koppeln und/oder die Show-Struktur (20) an dem Fahrgeschäftsfahrzeug (12) zu befestigen.

10. Vergnügungsparkfahrgeschäftssystem nach Anspruch 1, wobei die Verschiebung und/oder Ausrichtung des Basiskopplers (50) relativ zu dem ersten Koppler konfiguriert ist, um eine Vielzahl von Magneten des Basiskopplers (50) relativ zu einer Vielzahl von Magneten des ersten Kopplers zu versetzen, um die Show-Struktur (20) mit dem Fahrfahrzeug (12) in Eingriff oder außer Eingriff zu bringen.

11. Vergnügungsparkfahrgeschäftssystem nach Anspruch 1, wobei die Show-Struktur (20) eine animierte Figur umfasst, die konfiguriert ist, um basierend auf Leistung betätigt zu werden, die über den ersten Koppler, den zweiten Koppler oder beide empfangen wird.

12. Manipulator (22) für ein Show-Fahrgeschäftssystem, der Manipulator (22) umfassend:
einen oder mehrere Arme und ein oder mehrere Gelenke, die konfiguriert sind, um eine Bewegung des Manipulators (22) zu ermöglichen; und
einen Transportkoppler (52), der mit einem Arm des einen oder der mehreren Arme gekoppelt und/oder an diesem befestigt ist und konfiguriert ist, um lösbar mit einem Show-Strukturkoppler (38) einer Show-Struktur (20) gekoppelt und/oder an diesem befestigt zu werden, wobei der Transportkoppler (52) umfasst:
eine Bodenplatte (56), umfassend einen oder mehrere Magnete (58);
einen Motor (62), der mit der Bodenplatte gekoppelt und/oder an dieser befestigt ist und konfiguriert ist, um die Bodenplatte (56) zu verschieben und/oder auszurichten;
eine Leistungsinduktionsspule (68), die konfiguriert ist, um der Show-Struktur (20) als Reaktion auf das Koppeln und/oder Befestigen des Transportkopplers (52) mit dem bzw. an dem Show-Strukturkoppler (38) Leistung bereitzustellen; und
einen Datenkommunikator (70), der konfiguriert ist, um Daten an die Show-Struktur (20) zu kommunizieren, als Reaktion darauf, dass der Transportkoppler (52) mit dem Show-Strukturkoppler (38) koppelt und/oder an diesem befestigt wird.

13. Manipulator nach Anspruch 12, wobei die Leistungsinduktionsspule (68) den einen oder die mehreren Magnete umgibt, wobei der Datenkommunikator (70) eine Antenne umfasst, und wobei die Antenne die Leistungsinduktionsspule (68) umgibt; oder
wobei der eine oder die mehreren Magnete der Bodenplatte konfiguriert sind, um sich mit einem oder mehreren zusätzlichen Magneten, die der Show-Struktur (20) zugeordnet sind, auszurichten, um die Show-Struktur (20) mit dem Manipulator (22) zu koppeln und/oder die Show-Struktur (20) an dem Manipulator (22) zu befestigen.

14. Show-Struktur (20), die konfiguriert ist, um zur Betrachtung durch Passagiere betrieben zu werden, wobei die Show-Struktur (20) Folgendes umfasst:
einen ersten Koppler, der an einer ersten Stelle an der Show-Struktur (20) positioniert ist, wobei der erste Koppler durch einen Basiskoppler (50) eines Fahrgeschäftsfahrzeugs (12) oder einen Requisitenkoppler einer Show-Aktionsrequisite zugänglich ist und konfiguriert ist, um die Show-Struktur lösbar mit dem Fahrgeschäftsfahrzeug (12) oder der Show-Aktionsrequisite zu koppeln und/oder die Show-Struktur lösbar an dem Fahrgeschäftsfahrzeug (12) oder der Show-Aktionsrequisite zu befestigen; und
einen zweiten Koppler, der an einer zweiten Stelle an der Show-Struktur (20) positioniert ist, wobei der zweite Koppler durch einen Transportkoppler (52) eines Manipulators zugänglich ist und konfiguriert ist, um die Show-Struktur lösbar mit dem Manipulator zu koppeln und/oder die Show-Struktur lösbar an dem Manipulator zu befestigen,
wobei sowohl der erste Koppler als auch der zweite Koppler eine Bodenplatte einschließen, die einen oder mehrere Magnete umfasst, die konfiguriert sind, um sich mit einem oder mehreren zusätzlichen Magneten des Basiskopplers (50), des Transportkopplers (52) oder des Requisitenkopplers auszurichten, um die Show-Struktur (20) mit dem Fahrgeschäftsfahrzeug (12), dem Manipulator (22) bzw. der Show-Aktionsrequisite zu koppeln und/oder um die Show-Struktur an dem Fahrgeschäftsfahrzeug (12), dem Manipulator (22) bzw. der Show-Aktionsrequisite zu befestigen.

15. Show-Struktur nach Anspruch 14, wobei die Show-Struktur eine animierte Figur umfasst, die konfiguriert ist, um basierend auf dem Empfang von Leistung von einer Leistungsinduktionsspule (68) des Fahrgeschäftsfahrzeugs (12), des Manipulators (22) oder der Show-Aktionsrequisite betrieben zu werden; oder
wobei die Show-Struktur konfiguriert ist, um basierend auf Daten betrieben zu werden, die von einem Datenkommunikator (70) des Basiskopplers (50), des Transportkopplers (52) oder des Requisitenkopplers empfangen werden.

## Revendications

1. Système de manège de parc d'attractions, comprenant :
un ou plusieurs véhicules de manège (12) conçus pour transporter des passagers, dans lequel chaque véhicule de manège (12) du ou des véhicules de manège comporte une surface extérieure et un accouplement de base (50) disposé sur, ou accessible par l'intermédiaire de, la surface extérieure ;
une structure de spectacle (20) conçue pour fonctionner pour visualisation par les passagers, dans lequel la structure de spectacle (20) comprend :
un premier accouplement conçu pour s'accoupler et/ou se fixer de manière amovible à un accouplement de base (50) respectif d'un véhicule de manège (12) du ou des véhicules de manège ; et
un second accouplement ; et
un manipulateur (22) conçu pour s'accoupler et/ou se fixer à la structure de spectacle (20) et transporter la structure de spectacle (20) vers et à partir du véhicule de manège (12) du ou des véhicules de manège, dans lequel le manipulateur (22) comprend un accouplement de transport (52) conçu pour s'accoupler et/ou se fixer de manière amovible au second accouplement.

2. Système de manège de parc d'attractions selon la revendication 1, dans lequel l'accouplement de base (50) comprend :
une plaque de base (56) comprenant un ou plusieurs aimants (58) ;
un moteur (62) accouplé et/ou fixé à la plaque de base (56) et conçu pour déplacer en translation et/ou orienter la plaque de base ; et
une bobine d'induction de puissance (68) conçue pour fournir de la puissance à la structure de spectacle (20) en réponse à la structure de spectacle (20) s'accouplant et/ou se fixant au véhicule de manège du ou des véhicules de manège (12).

3. Système de manège de parc d'attractions selon la revendication 2, dans lequel la structure de spectacle (20) comprend un personnage animé conçu pour fonctionner en fonction de la réception de puissance en provenance de la bobine d'induction de puissance (68).

4. Système de manège de parc d'attractions selon la revendication 2, dans lequel la structure de spectacle (20) est conçue pour fonctionner en fonction de données et dans lequel l'accouplement de base (50) comprend une antenne configurée pour transmettre les données à la structure de spectacle (20) ; et facultativement
dans lequel la bobine d'induction de puissance (68) entoure le ou les aimants, et dans lequel l'antenne entoure la bobine d'induction de puissance.

5. Système de manège de parc d'attractions selon la revendication 2, dans lequel le premier accouplement comprend une première plaque de montage (72) comprenant un ou plusieurs aimants supplémentaires (74) conçus pour s'aligner avec le ou les aimants (58) de l'accouplement de base (50) pour accoupler la structure de spectacle (20) au véhicule de manège (12) et/ou fixer la structure de spectacle (20) au véhicule de manège ; et facultativement
dans lequel le ou les aimants supplémentaires (74) du premier accouplement sont fixes par rapport à la structure de spectacle (20), et dans lequel le ou les aimants (58) de l'accouplement de base (50) peuvent se déplacer en translation et/ou sont aptes à être orientés par rapport à l'aimant ou aux aimants supplémentaires du premier accouplement.

6. Système de manège de parc d'attractions selon la revendication 2, dans lequel la translation et/ou l'orientation de la plaque de base (56) par l'intermédiaire du moteur (62) sont conçues pour désaccoupler la structure de spectacle (20) du véhicule de manège (12).

7. Système de manège de parc d'attractions selon la revendication 2, dans lequel l'accouplement de transport (52) comprend :
une plaque de base supplémentaire comprenant un ou plusieurs aimants supplémentaires ;
un moteur supplémentaire accouplé et/ou fixé à la plaque de base supplémentaire et conçu pour déplacer en translation et/ou orienter la plaque de base supplémentaire ; et
une bobine d'induction de puissance supplémentaire (68) conçue pour fournir de la puissance à la structure de spectacle (20) en réponse à la structure de spectacle (20) s'accouplant et/ou se fixant à l'accouplement de transport (52) ; et facultativement
dans lequel l'accouplement de transport (52) comprend une antenne configurée pour transmettre des données à la structure de spectacle (20).

8. Système de manège de parc d'attractions selon la revendication 1, dans lequel le premier accouplement comprend un tenon conçu pour venir en prise avec un évidement de l'accouplement de base (50) du véhicule de manège (12) pour faciliter un accouplement de la structure de spectacle (20) au véhicule de manège (12) et/ou pour faciliter la fixation de la structure de spectacle (20) au véhicule de manège (12).

9. Système de manège de parc d'attractions selon la revendication 1, dans lequel l'accouplement de base (50) comprend une première pluralité d'aimants, dans lequel le premier accouplement comprend une seconde pluralité d'aimants, dans lequel la première pluralité d'aimants et la seconde pluralité d'aimants sont conçues pour s'aligner et venir en prise l'une avec l'autre pour accoupler la structure de spectacle (20) au véhicule de manège (12) et/ou pour fixer la structure de spectacle (20) au véhicule de manège (12).

10. Système de manège de parc d'attractions selon la revendication 1, dans lequel une translation et/ou une orientation de l'accouplement de base (50) par rapport au premier accouplement sont conçues pour décaler une pluralité d'aimants de l'accouplement de base (50) par rapport à une pluralité d'aimants du premier accouplement pour mettre en prise ou désaccoupler la structure de spectacle (20) par rapport au véhicule de manège (12).

11. Système de manège de parc d'attractions selon la revendication 1, dans lequel la structure de spectacle (20) comprend un personnage animé conçu pour être actionné en fonction de puissance reçue par l'intermédiaire du premier accouplement, du second accouplement, ou de l'un et de l'autre.

12. Manipulateur (22) destiné à un système de spectacle-manège, le manipulateur (22) comprenant :
un ou plusieurs bras et une ou plusieurs articulations conçus pour permettre un mouvement du manipulateur (22) ; et
un accouplement de transport (52) accouplé et/ou fixé à un bras du ou des bras et conçu pour s'accoupler et/ou se fixer de manière amovible à un accouplement de structure de spectacle (38) d'une structure de spectacle (20), dans lequel l'accouplement de transport (52) comprend :
une plaque de base (56) comprenant un ou plusieurs aimants (58) ;
un moteur (62) accouplé et/ou fixé à la plaque de base et conçu pour déplacer en translation et/ou orienter la plaque de base (56) ;
une bobine d'induction de puissance (68) conçue pour fournir de la puissance à la structure de spectacle (20) en réponse à l'accouplement de transport (52) s'accouplant et/ou se fixant à l'accouplement de structure de spectacle (38) ; et
un système de communication de données (70) configuré pour communiquer des données à la structure de spectacle (20) en réponse à l'accouplement de transport (52) s'accouplant et/ou se fixant à l'accouplement de structure de spectacle (38).

13. Manipulateur selon la revendication 12, dans lequel la bobine d'induction de puissance (68) entoure le ou les aimants, dans lequel le système de communication de données comprend (70) une antenne, et dans lequel l'antenne entoure la bobine d'induction de puissance (68) ; ou,
dans lequel le ou les aimants de la plaque de base sont conçus pour s'aligner avec un ou plusieurs aimants supplémentaires associés à la structure de spectacle (20) pour accoupler la structure de spectacle (20) au manipulateur (22) et/ou pour fixer la structure de spectacle (20) au manipulateur (22).

14. Structure de spectacle (20) conçue pour fonctionner pour visualisation par des passagers, la structure de spectacle (20) comprenant :
un premier accouplement positionné au niveau d'une première localisation sur la structure de spectacle (20), dans laquelle le premier accouplement est accessible par un accouplement de base (50) d'un véhicule de manège (12) ou un accouplement d'élément de décor d'un élément de décor d'action de spectacle et est conçu pour accoupler de manière amovible la structure de spectacle au véhicule de manège (12) ou à l'élément de décor d'action de spectacle et/ou fixer de manière amovible la structure de spectacle au véhicule de manège (12) ou à l'élément de décor d'action de spectacle ; et
un second accouplement positionné au niveau d'une seconde localisation sur la structure de spectacle (20), dans laquelle le second accouplement est accessible par un accouplement de transport (52) d'un manipulateur et est conçu pour accoupler de manière amovible la structure de spectacle au manipulateur et/ou fixer de manière amovible la structure de spectacle au manipulateur,
dans laquelle chacun du premier accouplement et du second accouplement comporte une plaque de base comprenant un ou plusieurs aimants conçus pour s'aligner avec un ou plusieurs aimants supplémentaires de l'accouplement de base (50), de l'accouplement de transport (52), ou de l'accouplement d'élément de décor, pour accoupler la structure de spectacle (20) au véhicule de manège (12), au manipulateur (22) ou à l'élément de décor d'action de spectacle, respectivement, et/ou pour fixer la structure de spectacle au véhicule de manège (12), au manipulateur (22) ou à l'élément de décor d'action de spectacle, respectivement.

15. Structure de spectacle selon la revendication 14, dans laquelle la structure de spectacle comprend un personnage animé conçu pour fonctionner en fonction de la réception de puissance en provenance d'une bobine d'induction de puissance (68) du véhicule de manège (12), du manipulateur (22) ou de l'élément de décor d'action de spectacle ; ou
dans laquelle la structure de spectacle est conçue pour fonctionner en fonction de données reçues d'un système de communication de données (70) de l'accouplement de base (50), de l'accouplement de transport (52) ou de l'accouplement d'élément de décor.
